# EUROPÄISCHE PATENTANMELDUNG

(11) **EP 0 705 774 A2**
(43) Veröffentlichungstag der Anmeldung: **10.04.1996**
(21) Anmeldenummer: 95114850.1
(22) Anmeldetag: 21.09.1995
(51) Int. Cl.: B65F 1/06, B65F 1/14

(54) **Vorrichtung zum Aufnehmen von ölhaltigen Flüssigkeitsgemischen**

(30) Priorität: 23.09.1994 DE 4433920
(71) Anmelder: Stahl, Otto, D-93173 Wenzenbach (DE)
(72) Erfinder: Stahl, Otto, D-93173 Wenzenbach (DE)
(74) Vertreter: Göbel, Matthias, Dipl.-Ing.

(57) **Zusammenfassung**

Bei einer Vorrichtung zum Aufnehmen von ölhaltigen Flüssigkeitsgemischen, insbesondere von unter Gas-Luft-Druck stehenden Öl-Wassergemischen, z.B. Kompressorenkondensaten, erfolgt eine Verringerung des Entsorgungsaufwandes durch einen durch einen Deckel (5) mit Spannring (16) dicht verschließbaren Faßbehälter (1) aus Eisenwerkstoff und einer an den Innenwandungen (1') des Faßbehälters (1) anlegbaren beutelförmigen Einlage (4) aus einem ölbeständigen flexiblen Kunststoff, einer am Deckel (5) festgelegten Druckentlastungskammer (6) mit einem Einlauf (9) und einem in den Faßbehälter (1) ausmündenden Ablauf (10) für das Flüssigkeitsgemisch sowie einer Öffnung zur Abführung des Druckmediums und einer am Deckel (5) angeordneten, in den Faßbehälter (1) eintauchenden Füllstandsanzeige (18).

## Beschreibung

Die Erfindung betrifft eine Vorrichtung zum Aufnehmen von ölhaltigen Flüssigkeitsgemischen, insbesondere von unter Gas-Luft-Druck stehenden Öl-Wassergemischen, z.B. Kompressorenkondensaten.

Es ist bekannt, daß Verdichter für Druckluft oder Druckgas in der Regel ölgeschmiert arbeiten und daß dabei mit Öl durchsetztes Kondensat anfällt, das nur schwierig und technisch aufwendig zu entsorgen ist, was sich ungünstig für einen störungsfreien Betriebsablauf der Verdichter auswirkt.

Es ist Aufgabe der Erfindung einfache und sichere Maßnahmen zur Verringerung des Aufwands bei der Entsorgung, insbesondere von druckluftbelasteten Öl-Wassergemischen zu schaffen.

Erfindungsgemäß ist diese Aufgabe durch einen durch einen Deckel mit Spannring dicht verschließbaren Faßbehälter aus Eisenwerkstoff und einer an den Innenwandungen des Faßbehälters anlegbaren beutelförmigen Einlage aus einem ölbeständigen flexiblen Kunststoff, einer am Deckel festgelegten Druckentlastungskammer mit einem Einlauf und einem in den Faßbehälter ausmündenden Ablauf für das Flüssigkeitsgemisch sowie einer Öffnung zur Abführung des Druckmediums und einer am Deckel angeordneten, in den Faßbehälter eintauchenden Füllstandsanzeige, erreicht. Auf diese Weise ist ein Sammelsystem gebildet, das die Kondensate durch die Füllstandsanzeige überwacht kontinuierlich aufnimmt und geschlossen aufbewahrt. Das so geschaffene Sammelsystem ist periodisch an Zwischenlager transportierbar oder über Tankwagen durch Abpumpen entleerbar. Die Kombination von Faßkörper und Einlage ergibt einen doppelwandigen Behälter, der den abfallrechtlichen und wasserrechtlichen Bestimmungen entspricht. Es versteht sich, daß das so geschaffene Sammelsystem auch zur Aufnahme beliebig anderweitiger Gemische, z.B. Emulsionen von Mineralölprodukten, synthetischen Kühl- und Schmiermitteln od.dgl., geeignet ist. Fernerhin ist denkbar, den Faßbehälter in verschiedenen Größen und Formen auszubilden. Zweckmäßig ist der Faßbehälter durch ein Sickenfaß gebildet.

In Ausgestaltung der Vorrichtung ist vorgesehen, daß die Einlage mit ihrem öffnungsseitigen Ende am Faßbehälter, z.B. durch gemeinsame Klemmung von Faßbehälter und Deckel im Faßbehälter fixiert ist. Die Einlage kann hierzu mit ihrem öffnungsseitigem Ende über den die Öffnung des Faßbehälters umfassenden Rand hinweggeführt und über eine Teillänge des Faßbehälters zurückgebogen sein. Es besteht die Möglichkeit die Einlage fest oder auswechselbar im Faßbehälter anzuordnen.

In weiterer Ausbildung der Vorrichtung ist die Druckentlastungskammer bevorzugt zylindrisch und über eine Teilhöhe doppelwandig ausgebildet, der Zwischenraum mit einem tangentialen Einlauf für das unter Druck stehende Öl-Wassergemisch verbunden und die Unterseite der Druckentlastungskammer mit einer Ablauföffnung mit anschliessendem Ablaufrohr versehen, während die Oberseite zur Abführung des Gas-Luftmediums offen mit in der Öffnung eingestelltem Filterkörper ausgebildet ist, der vor austretenden Aerosolen schützt.

Schließlich ist noch vorgesehen, daß die Füllstandsanzeige durch ein aufwickelbares mit Aufdrucken oder Symbolen versehenes Anzeigeband oder einen Schnurwickel und einem am freien Ende desselben angeordneten Schwimmkörper gebildet ist.

In Fortbildung der Erfindung ist zum Entsorgen von unter Gas-Luftdruck stehenden Öl-Wassergemischen, z.B. Kompressorkondensaten, unter Verwendung eines über eine Kondensatleitung mit einem Kompressor verbundenen Öl-Wassertrenners vorgesehen, daß die Kondensatleitung vom Öl-Wassertrenner trennbar und mit der Druckentlastungskammer des Faßbehälters verbindbar ist, eine in Förderrichtung reversible Flüssigkeitspumpe mit zwei bedarfsweise als Zu- und Abläufe dienenden Anschlüssen für je eine flexible Rohrleitung dem Öl-Wassertrenner und dem Faßbehälter zugeordnet ist, daß die eine Rohrleitung am freien Ende eine Sauglanze und die andere Rohrleitung am freien Ende eine Befüll- und Entnahmelanze aufweist und daß über Öffnungen im Öl-Wassertrenner und im Faßbehälter höhenveränderlich die Befüll- und Entnahmelanze, insbesondere annähernd bis zum Boden, in den Faßbehälter und die Sauglanze in den Öl-Wassertrenner einbringbar sind. Die unter Benutzung des vorbeschriebenen Faßbehälters auf diese Weise geschaffene Vorrichtung bildet ein Reinigungssystem für Öl-Wassertrenner und darüberhinaus ein Sammelsystem für aus dem Öl-Wassertrenner abzuführenden Öl-Wassergemischen (Kondensate). Zweckmäßig kann zur Gewichtseinsparung und zur Verringerung des Herstellungsaufwands für den Faßbehälter dieser aus einem öl- und säurebeständigen Kunststoff gebildet sein. Bevorzugt weist die Sauglanze an ihrem freien Ende einen, eine Anzahl Durchtrittsöffnungen für das Öl-Wassergemisch (Kondensat) versehenen Düsenkopf auf.

Zur Durchführung der Entsorgung ist die Vorrichtung mit folgenden Verfahrensschritten dergestalt anwendbar, daß der Öl-Wassertrenner zunächst von der Kondensatleitung getrennt und die Kondensatleitung mit der Druckentlastungskammer des Faßbehälters verbunden wird, nachfolgend über die Öffnung im Öl-Wassertrenner die Sauglanze in den Kondensatsumpf des Öl-Wassertrenners eingebracht wird, danach das Kondensat über die Sauglanze durch die Flüssigkeitspumpe aus dem Öl-Wassertrenner abgezogen und über die in eine Öffnung des Faßbehälters eingeschobene Befüll- und Entnahmelanze in den Faßbehälter eingeleitet wird und daß weiterhin durch Drehrichtungsänderung der Flüssigkeitspumpe das Kondensat über die Befüll- und Entnahmelanze dem Faßbehälter wieder entzogen und mit der Sauglanze die an den Wandungen des Öl-Wassertrenners anhaftenden Schmutzpartikel abgesprüht werden und daß schließlich durch erneute Richtungsänderung der Flüssigkeitspumpe das Kondensat einschließlich der Schmutzpartikel aus dem Öl-Wassertrenner vermittels der Sauglanze abgezogen und über die Befüll- und Entnahmelanze in den Faßbehälter rückgeführt wird und daß danach der Öl-Wassertrenner mit der Kondensatleitung verbunden wird, während der Inhalt des Faßbehälters z.B. an eine Emulsionsspaltanlage abgeführt wird.

Die Erfindung ist an einem Ausführungsbeispiel in der Zeichnung verdeutlicht. Es zeigen:
- Fig. 1: eine Vorrichtung in Seitenansicht,
- Fig. 2: einen Faßbehälter in Seitenansicht, teilweise im Schnitt,
- Fig. 3: einen Deckel mit Druckentlastungskammer und Füllstandsanzeige in Seitenansicht,
- Fig. 4: einen Spannring in Seitenansicht,
- Fig. 5: eine Druckentlastungskammer in Seitenansicht, teilweise im Schnitt, vergrößert,
- Fig. 6: ein Öl-Wassertrenner mit Kondensatleitung in Seitenansicht, schematisch,
- Fig. 7: ein Öl-Wassertrenner und ein mit der Kondensatleitung verbundener Faßbehälter,
- Fig. 8: eine Vorrichtung in Seitenansicht in Absaugstellung für das im Öl-Wassertrenner befindliche Kondensat,
- Fig. 9: eine Vorrichtung in Seitenansicht, in Absprühstellung des Öl-Wassertrenners,
- Fig. 10: eine Vorrichtung in Seitenansicht, in der Arbeitsstellung der Fig. 8,
- Fig. 11: einen Öl-Wassertrenner verbunden mit einer Kondensatleitung und einen von der Kondensatleitung abgetrennten Faßbehälter in Seitenansicht und
- Fig. 12: eine Flüssigkeitspumpe mit einer Befüll- und Entnahmelanze sowie einer Sauglanze.

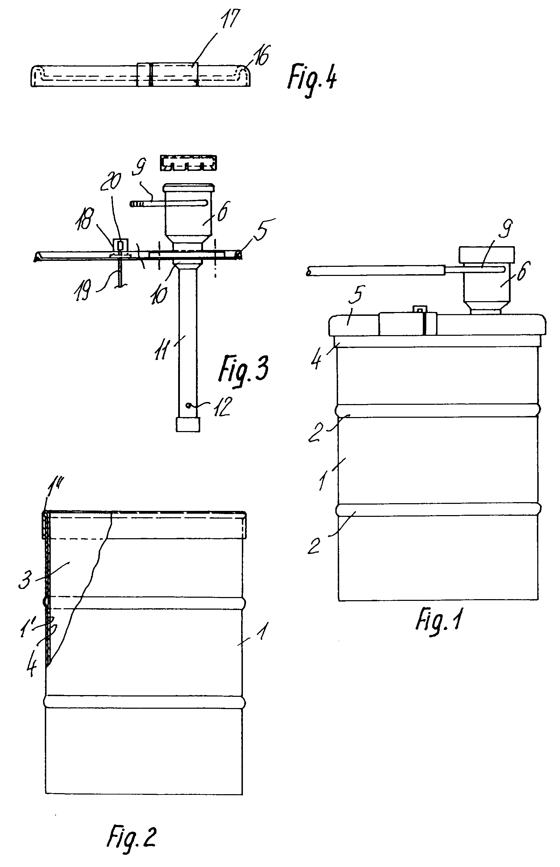

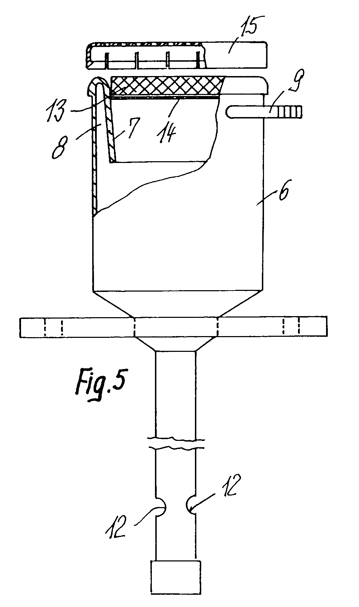

In den Fig. ist mit 1 ein Faßbehälter aus einem Eisenwerkstoff bezeichnet, der zu seiner Versteifung Sicken 2 aufweist. In den Innenraum 3 des Faßbehälters 1 ist eine beutelförmige Einlage 4 aus einem Folienwerkstoff eingebracht, die sich an die Innenwandungen 1' des Faßbehälters 1 anlegt und mit ihrem freien Ende über die Randkante 1'' des Faßbehälters 1 zurückgebogen ist. Der Faßbehälter 1 bildet gemeinsam mit der Einlage einen doppelwandigen Aufnahmebehälter für Öl-Wassergemische. An seinem offenen Ende ist der Faßbehälter 1 durch einen Deckel 5 verschließbar, der wie Fig. 1 und 3 erkennen lassen, eine Druckentlastungskammer 6 fest trägt. Die Druckentlastungskammer 6 ist beim Ausführungsbeispiel zylindrisch gefertigt und wie die Fig. 5 zeigt, über eine Teilhöhe mit einer Doppelwand 7 versehen. In den gebildeten Zwischenraum 8 mündet der Einlauf 9 für das Öl-Wassergemisch aus, wobei die Einleitung manuell oder automatisch über Magnetventile gesteuert, erfolgen kann. An ihrem unteren Ende 6' ist die Druckentlastungskammer 6 mit einem Ablauf 10 mit sich an diesem anschließenden Abflußrohr 11 versehen, das in den Faßbehälter 1 eintaucht und zum Übertritt von Öl-Wassergemischen Öffnungen 12 aufweist. Das obere Ende der Druckentlastungskammer nimmt einen Filter 13 auf, der auf einem Gitter 14 abgestützt und durch eine Kappe 15 gehalten ist.

Durch Einleiten des Kondensats in den Zwischenraum 8 erfolgt eine Beruhigung des unter Luftdruck stehenden Kondensats, das nach unten über das Abflußrohr 11 in den Faßbehälter gelangt, während die sich abtrennende Druckluft nach oben über den Filter 13 abströmt. Der Deckel 5 ist durch einen Spannring 16 mit Schloss 17 auf dem Faßbehälter 1 festlegbar.

Weiter ist am Deckel 5 eine Füllstandsanzeige 18 befestigt, die mit einem Anzeigeband 19 in den Faßbehälter 1 eintaucht und die Höhe des Füllgrades an einer Skala 20 anzeigt.

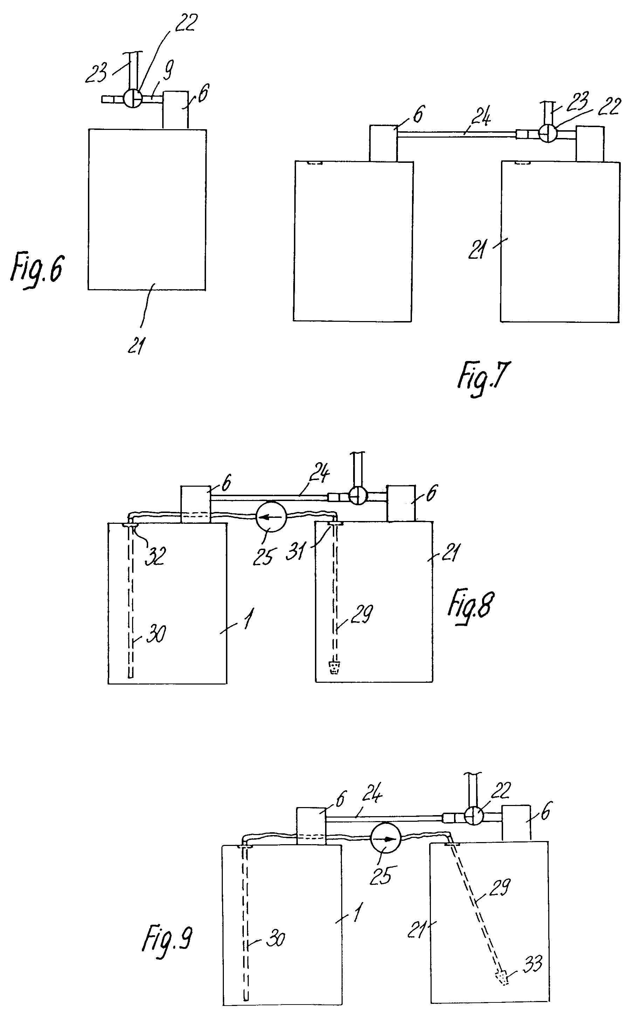

Bei der Vorrichtung der Fig. 6 ist ein an sich bekannter Öl-Wassertrenner 21 schematisch wiedergegeben, der eine Druckentlastungskammer 6 aufweist, die über den Einlauf 9 und ein Mehrwegeventil 22 an eine Kondensatleitung 23 anliegt, die z.B. mit einem Kompressor (nicht gezeigt) verbunden sein kann. Über die Druckentlastungskammer 6 gelangt das Öl-Wassergemisch (Kondensat) in den Öl-Wassertrenner 21.

In Fig. 7 ist der Öl-Wassertrenner 21 von der Kondensatleitung 23 durch das Mehrwegeventil 22 getrennt und die Kondensatleitung 23 über einen Adapterschlauch 24 mit der Druckentlastungskammer 6 des Faßbehälters 1 in Verbindung gebracht, wodurch das Öl-Wassergemisch unmittelbar in den Faßbehälter 1 gelangt.

In Fig. 12 ist eine reversible Flüssigkeitspumpe 25 gezeigt, an deren Anschlüsse 26 flexible Rohrleitungen, z.B. Schläuche 27,28 befestigt sind. Die flexible Rohrleitung 27 trägt am freien Ende eine Sauglanze 29 und die flexible Rohrleitung 28 eine Befüll- und Entnahmelanze 30.

In der Arbeitsstellung der Vorrichtung gemäß der Fig. 8 ist die Sauglanze 29 über die Öffnung 31 in den Öl-Wassertrenner 21 höhenveränderlich eingeführt, wobei sich die Sauglanze 29 etwa bis in den Bodenbereich des Öl-Wassertrenners 21 erstreckt. Die Flüssigkeitspumpe 25 bewirkt durch Absaugung des Öl-Wassergemischs in Pfeilrichtung die Entleerung des Ölwassertrenners 21 und den Eintritt des Öl-Wassergemischs in den Faßbehälter 1 über die Befüll- und Entnahmelanze 30. Der Faßbehälter 1 ist zur Einführung der Befüll- und Entnahmelanze im Deckelbereich mit einer Öffnung 32 versehen. Nach Entleerung des Öl-Wassertrenners 21 sind durch Umkehrung der Drehrichtung der Flüssigkeitspumpe (Pfeilrichtung der Fig. 9) das im Faßbehälter 1 befindliche Öl-Wassergemisch über die Befüll- und Entnahmelanze 30 abziehbar und vermittels der Sauglanze 29 die Wandungen des Öl-Wassertrenners 21 zu Reinigungsvorgängen desselben absprühbar. Die Sauglanze 29 weist an ihrem freien Ende einen Düsenkopf 33 mit einer Anzahl Sprühöffnungen 34 auf.

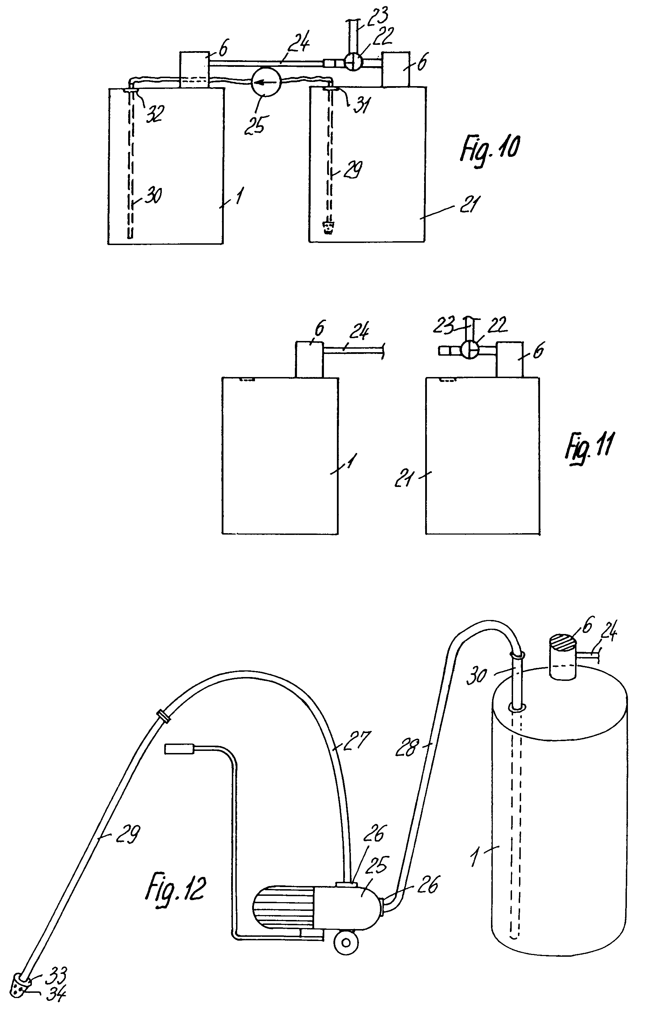

Nach Erledigung des Absprühvorgangs kann durch Umkehrung der Drehrichtung der Flüssigkeitspumpe 25, wie in Fig. 10 gezeigt, der Öl-Wassertrenner 21 erneut entleert werden und das Öl-Wassergemisch einschließlich der Schmutzpartikel im Faßbehälter 1 gesammelt werden. Danach ist die Flüssigkeitspumpe 25, gemäß Fig. 11, mit der Saug-29 bzw. Befüll- und Entnahmelanze 30 aus dem Öl-Wassertrenner 21 bzw. dem Faßbehälter 1 zu entnehmen und die Kondensatleitung 23 über das Mehrwegeventil 22 von der Druckentlastungskammer 6 des Faßbehälters 1 zu trennen und an die Druckentlastungskammer 6 des Öl-Wassertrenners 21 anzulegen. Das im Faßbehälter 1 gesammelte Öl-Wassergemisch einschließlich der Schmutzpartikel kann, z.B. einer Emulsionsspaltanlage (nicht gezeigt) zugeführt werden.

## Patentansprüche

1. Vorrichtung zum Aufnehmen von ölhaltigen Flüssigkeitsgemischen, insbesondere von unter Gas-Luft-Druck stehenden Öl-Wassergemischen, z.B. Kompressorenkondensaten, gekennzeichnet durch einen durch einen Deckel (5) mit Spannring dicht verschließbaren Faßbehälter (1) aus Eisenwerkstoff und einer an den Innenwandungen (1') des Faßbehälters (1) anlegbaren beutelförmigen Einlage (4) aus einem ölbeständigen flexiblen Kunststoff, einer am Deckel (5) festgelegten Druckentlastungskammer (6) mit einem Einlauf (9) und einem in den Faßbehälter (1) ausmündenden Ablauf (10) für das Flüssigkeitsgemisch sowie einer Öffnung zur Abführung des Druckmediums und einer am Deckel (5) angeordneten, in den Faßbehälter (1) eintauchenden Füllstandsanzeige (18).

2. Vorrichtung nach Anspruch 1, dadurch gekennzeichnet, daß der Faßbehälter (1) als Sickenfaß ausgebildet ist.

3. Vorrichtung nach Anspruch 1, dadurch gekennzeichnet, daß die Einlage (4) mit dem öffnungsseitigen Ende am Faßbehälter (1), z.B. durch gemeinsame Klemmung von Faßbehälter (1) und Deckel (5) im Faßbehälter (1) fixiert ist.

4. Vorrichtung nach Anspruch 3, dadurch gekennzeichnet, daß die Einlage (4) auswechselbar im Faßbehälter angeordnet ist.

5. Vorrichtung nach Anspruch 1, dadurch gekennzeichnet, daß die Druckentlastungskammer (6) zylindrisch und über eine Teilhöhe doppelwandig ausgebildet ist, das der Zwischenraum (8) mit einem tangentialen Einlauf (9) für das unter Druck stehende Öl-Wassergemisch verbunden ist, die Unterseite der Druckentlastungskammer (6) eine Ablauföffnung (10) mit anschließenden Ablaufrohr (11) aufweist und die Oberseite zur Abführung des Gas-Luftmediums offen mit in der Öffnung eingestelltem Filterkörper (13) ausgebildet ist.

6. Vorrichtung nach Anspruch 1, dadurch gekennzeichnet, daß die Füllstandsanzeige (18) ein aufwickelbares mit Aufdrucken oder Symbolen versehenes Anzeigeband (19) oder einen Schnurwickel und einen am freien Ende derselben angeordneten Schwimmkörper aufweist.

7. Vorrichtung zum Entsorgen von unter Gas-Luftdruck stehenden Öl-Wassergemischen, z.B. Kompressorkondensaten, unter Verwendung eines über eine Kondensatleitung mit einem Kompressor verbundenen Öl-Wassertrenner, dadurch gekennzeichnet, daß die Kondensatleitung (23) vom Öl-Wassertrenner (21) trennbar und mit der Druckentlastungskammer (6) des Faßbehälters (1) verbindbar ist, dem Öl-Wassertrenner (21) und dem Faßbehälter (1) eine in der Förderichtung reversible hydraulische Flüssigkeitspumpe (25) mit zwei bedarfsweise als Zu- und Abläufe dienenden Anschlüssen (26) für je eine flexible Rohrleitung (27,28) zugeordnet ist, daß die eine Rohrleitung (27) am freien Ende eine Sauglanze (29) und die andere Rohrleitung (28) am freien Ende eine Befüll- und Entnahmelanze (30) aufweist und daß über Öffnungen (31,32) im Öl-Wassertrenner (21) und im Faßbehälter (1) höhenveränderlich die Befüll- und Entnahmelanze (30) in den Faßbehälter (1) und die Sauglanze (29) in den Öl-Wassertrenner (21) einbringbar sind.

8. Vorrichtung nach Anspruch 1, dadurch gekennzeichnet, daß am freien Ende der Sauglanze (29) eine Anzahl Durchtrittsöffnungen (33) für Kondensat aufweisenden Düsenkopf (33) angeordnet ist.

9. Vorrichtung nach Anspruch 1, dadurch gekennzeichnet, daß der Faßbehälter (1) aus einem öl- und säurebeständigen Kunststoff gebildet ist.

10. Vorrichtung nach einem der vorangehenden Ansprüche 7 und 8, dadurch gekennzeichnet, daß die Befüll- und Entnahmelanze (30) und die Sauglanze (29) lösbar mittels den flexiblen Rohrleitungen (27,28) mit den Anschlüssen (26) der Flüssigkeitspumpe (25) verbindbar und die Verbindungen durch Sicherheitskupplungen schließbar sind.

11. Verfahren zum Entsorgen von unter Gas-Luftdruck stehenden Öl-Wassergemischen vermittels einer Vorrichtung nach Anspruch 7, dadurch gekennzeichnet, daß der Öl-Wassertrenner zunächst von der Kondensatleitung getrennt und die Kondensatleitung mit der Druckentlastungskammer des Faßbehälters verbunden wird, nachfolgend über die Öffnung im Öl-Wassertrenner die Sauglanze in den Kondensatsumpf des Öl-Wassertrenners eingebracht wird, das Kondensat über die Sauglanze durch die Flüssigkeitspumpe aus dem Öl-Wassertrenner abgezogen und über die über eine Öffnung in den Faßbehälter eingeschobene Befüll- und Entnahmelanze in den Faßbehälter eingeleitet wird und daß nachfolgend durch Drehrichtungsänderung der Flüssigkeitspumpe das Kondensat über die Befüll- und Entnahmelanze dem Faßbehälter entzogen und mit der Sauglanze die an den Wandungen des Öl-Wassertrenners anhaftenden Schmutzpartikel abgesprüht werden und durch erneute Drehrichtungsänderung der Flüssigkeitspumpe das Kondensat einschließlich der Schmutzpartikel aus dem Öl-Wassertrenner vermittels der Sauglanze abgezogen und über die Befüll- und Entnahmelanze in den Faßbehälter rückgeführt wird, der Öl-Wassertrenner mit der Kondensatleitung verbunden und der Inhalt des Faßbehälters an eine Emulsionsspaltanlage abgeführt wird.
